# EUROPEAN PATENT APPLICATION

(11) **EP 4 763 627 A1**
(43) Date of publication of application: **24.06.2026**
(21) Application number: 25315453.8
(22) Date of filing: 10.12.2025
(51) Int. Cl.: B60R 16/02, F16B 39/282, F16L 3/04, F16L 3/137

(54) **IMPROVED CABLE SUPPORT DEVICE**

(30) Priority: 18.12.2024 IT 202400028953
(71) Applicant: IVECO FRANCE S.A.S., 69200 Vénissieux (FR)
(72) Inventor: Mazoue, Gael, 69200 VENISSIEUX (FR)
(74) Representative: Studio Torta S.p.A.

(57) **Abstract**

Support device (1) for supporting a wire/cable (W) on a portion (2) of a vehicle, comprising a body (10) extending a long a first, a second and a third axis (X, Y, Z) and defining a first side (10'), a second side (10'') extending along the first and second axes (X, Y) and spaced along the third axis (Z) by a lateral side (10‴) of the body (10),

The body (10) defining a first and a second openings (11, 12) spaced along one between first and second axes (X, Y) and passing through body (10) along third axis (Z),
the second opening (12) being dimensioned to house a fixing element configured to fix the body (10) to the portion (2).

## Description

### CROSS-REFERENCE TO RELATED APPLICATIONS

This patent application claims priority from Italian patent application no. 102024000028953 filed on December 18, 2024, the entire disclosure of which is incorporated herein by reference.

### TECHNICAL FIELD

The present invention concerns a support device for cables, in particular electric cables.

The present invention finds its preferred, although not exclusive, application in vehicles. Reference will be made to this application by way of example below.

### BACKGROUND OF THE INVENTION

Vehicles tend to be more and more electrified in order to reduce their pollutant emissions. Public transport vehicles such as buses are indeed electrified as well.

To this aim, vehicles are provided with battery packs configured to store electrical energy and different operative systems, such as electric machine, configured to use or produce electrical energy and therefore exchange this latter with the battery packs of other operative systems of the vehicle.

The battery packs and the operative systems of the vehicle are therefore connected by wires that allow the above mentioned electrical energy exchange.

Accordingly, the fixation of such wires is a critical issue. Indeed, such fixation must be robust while avoiding to increase manufacturing time and therefore costs.

Moreover, such fixation should allow access easily to wire in case of maintenance.

Known connection means include holes that however are costly and let dirty elements and liquid to access within the vehicle space.

Another solution is to use welded brackets that however are costly, of difficult substitution and, moreover tend to deform, due to welding heat fixation, the element to which they are welded.

Moreover, in both cases, wires are in direct contact with metallic portions of the vehicle thereby increasing the risk of electric short circuits.

Therefore, the need is felt to provide a cable support in vehicles that is economic, compact and that is robust.

An aim of the present invention is to satisfy the above mentioned needs in a cost-effective and optimized manner.

### SUMMARY OF THE INVENTION

The aforementioned aim is reached by a cable support device, a vehicular portion and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a front perspective view of a cable support device according to the invention;
- Figure 2 is a rear perspective view of a cable support device according to the invention;
- Figure 3 is a sectioned view of the cable support device according to the invention; and
- Figures 4A-4B are perspective view of a vehicular portion comprising a cable supported by a cable support device according to the invention in two different operative configurations.

### DETAILED DESCRIPTION OF THE INVENTION

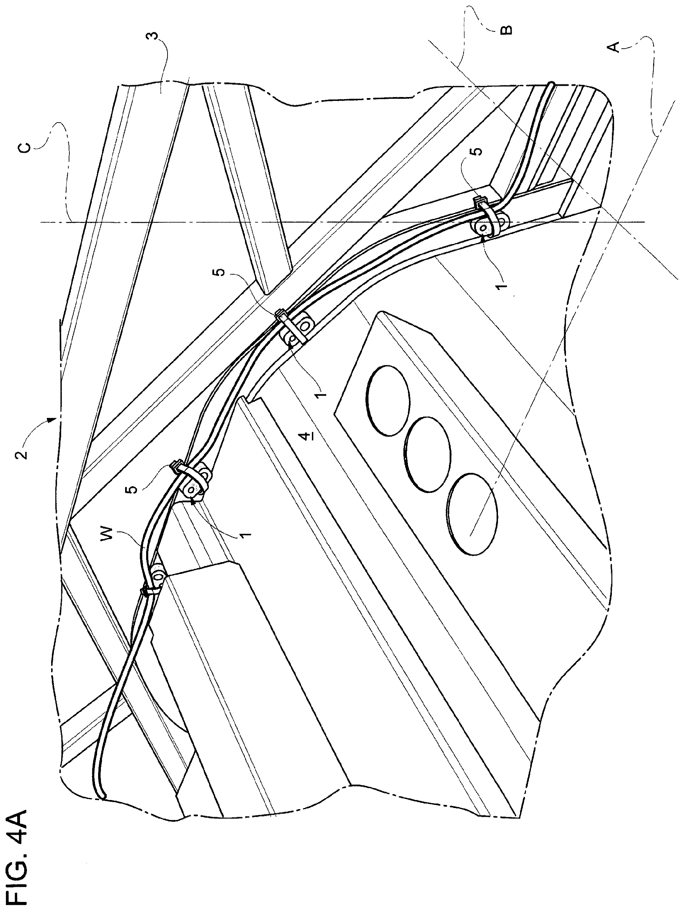

Figures 4A-4B disclose a portion 2 of a vehicle (not shown in its entirety) extending along a longitudinal axis A, a transversal axis B and a vertical axis C that are perpendicular one to the other.

In detail, portion 2 is a portion of the body 3 of the vehicle, such as, as exemplarily shown, a public transport vehicle such as a bus.

The portion 2 delimits a space 4 housing a wire/cable W secured via a support device 1 according to the invention.

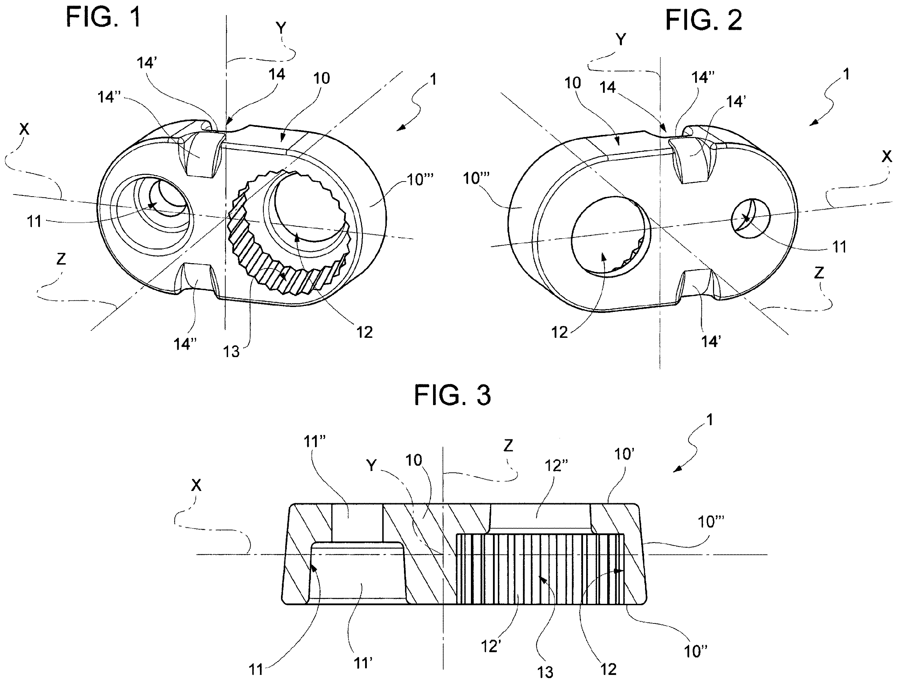

As shown in figures 1 to 3, the support device 1 comprises a main body 10. In the disclosed embodiment, main body 10 has a substantially flat shape, in further detail a beveled rectangle shape extending along a first and second axis directions X, Y perpendicular one to the other.

Owing to the above, the main body 10 defines a first side 10' and a second side 10" opposed one to the other along a third axis direction Z, perpendicular to the first and second axis directions X, Y. The first and second sides 10', 10" are connected by a lateral side 10‴.

In use, the first side 10' is faced to the portion 2, i.e. in the present case to the body 3 whereas the second side 10" is faced to space 4.

The support device 1 defines a first opening 11 and a second opening 12 spaced one with respect to the other long one between the first and second axes direction X, Y in which the shape of the main body 10 extends and passing through main body along the third axis direction Z.

In the disclosed embodiment, the first and second openings 11, 12 are spaced along the first axis direction X and more preferably their centers lie within the same axis that is parallel, and preferably coincident, with first axis direction X.

Preferably, first and second openings 11, 12 are circular and, in the disclosed embodiment, the second opening 12 has a greater diameter than the first opening 11.

Both first and second openings 11, 12 have not a constant opened cross-section along third axis direction Z and they comprise a first opening portion 11', 12' faced to second side 10" of the main body 10 and a second opening portion 11", 12'' faced to the first side 10' of the main body 10.

In detail, the second opening portions 11", 12'' have a smaller diameter with respect to the first openings portions 11', 12'. Preferably, first and second openings portions 11', 11", 12', 12" are concentric.

In particular, the second portion 12" of the second opening 12 is provided with a grooved profile 13 on its lateral delimiting side. Such grooved profile 13 comprises a plurality of grooves configured to define support edges for a nut head housing within second opening 12.

In detail, grooves have a tri-anguloid cross-section and have each a predetermined angular extension thereby defining corresponding possible positions of a nut head within the second opening 12.

Indeed, given n° the angular extension of each groove, the number of position is given by 360°/n°. In the disclosed example, the extension is 12° thereby defining thirty possible position of nut head.

The support device 1 further comprises at least one recess 14 realized between the lateral side 10''' and one between the first and second sides 10', 10".

In particular, in the disclosed embodiment, the support device 1 comprises a plurality of recesses 14', 14'' and in detail recesses 14 realized between the lateral side 10‴ and each the first and second sides 10', 10" on the two occurrences along the second axis direction Y.

Preferably, as shown, such plurality of recesses 14 are aligned one to the other thereby defining a sort of path about the body 10.

In detail, the at least one recess 14 are positioned along the first axis X between the two openings 11, 12.

Recesses 14 are dimensioned to allow housing of securing means 5, such as a colson collar that would pass about main body to secure the wire/cable W thereon.

In detail, the main body 10 is realized as a single element, i.e. it is monolithic. Preferably is realized in electric insulating material and more preferably is realized in plastic/polymeric material.

The operation of the embodiment of the invention as described above is the following.

In general, the body 10 is connected to the portion 2 via fixing means such as a screw or a bolt that can be housed within the second opening 12. The correct angular position required can be imparted by rotating the screw/bolt within the second opening 12 thereby allowing coupling via grooved profile at the correct angle. Once fixed, the wire/cable W can be coupled to the body in different manner.

According to a first manner (see figure 4A) the wire/cable W is secured via securing means 5 housed in recesses 14.

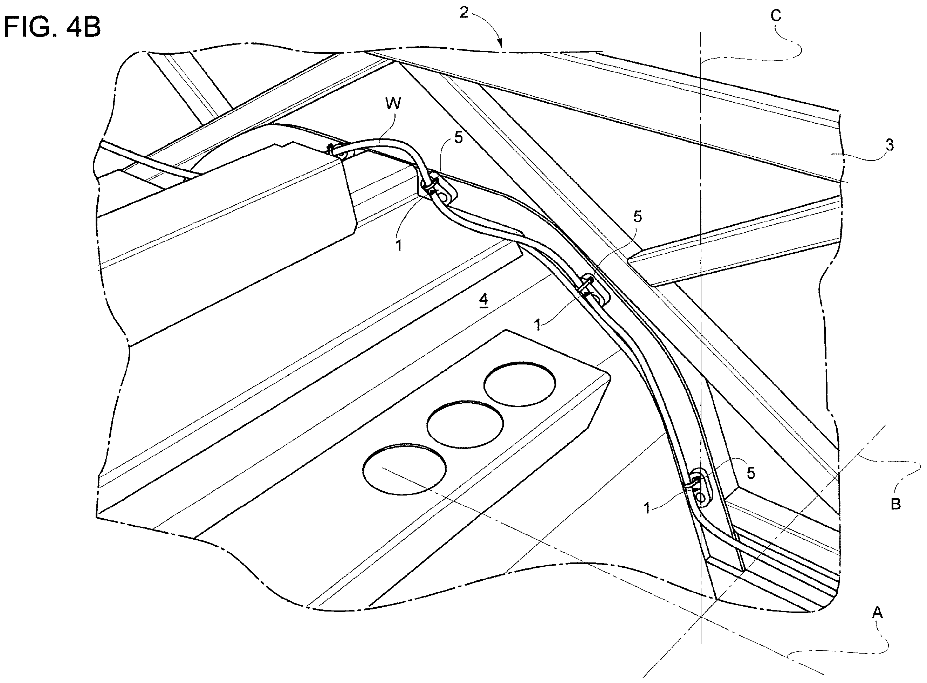

According to a second manner (see figure 4B) the wire/cable W is secured via securing means 5 housed in first opening 11.

According to a third manner (not shown) the wire/cable W is secured via securing means 5 passing through the second opening 12 together with fixing means housed therein.

In view of the foregoing, the advantages of a support device, a vehicular portion and a vehicle according to the invention are apparent.

Thanks to the provided support device, it is possible to support wire/cables on the vehicular portion without using costly brackets or use welding to provide fixation means on the vehicular portion.

Accordingly, the related disadvantages related to the use of welded brackets or welding in general are avoided.

Moreover, the provided support device is particularly compact and economic and can be shaped according to the specific vehicular need.

Furthermore, the presence of more openings and of the recess allows to fix the wire/cable to the support device in many possible manners thereby allowing greater versatility in use.

In detail, the use of a grooved profile allows to couple the support device to a bolt head with different angular positions in a simple manner.

It is clear that modifications can be made to the described support device, vehicular portion and vehicle which do not extend beyond the scope of protection defined by the claims.

For example, the number of openings, their shape and the shape of the main body may vary according to the specific need. Similarly, recess number and shape may vary accordingly.

Moreover, the material in which the main body can be varied such as the fact of being realized in two or more pieces.

Furthermore, grooved profile may be absent or may be realized in a different manner.

## Claims

1. Support device (1) for supporting a wire/cable (W) on a portion (2) of a vehicle,
said support device (1) comprising a body (10) extending a long a first, a second and a third axis (X, Y, Z) and defining a first side (10'), a second side (10") extending along the first and second axes (X, Y) and spaced along said third axis (Z) by a lateral side (10‴) of said body (10),
wherein said body (10) is realized as one piece in an electro-insulating material, said body (10) defining a first and a second openings (11, 12) spaced along one between said first and second axes (X, Y) and passing through said body (10) along said third axis (Z),
said second opening (12) being dimensioned to house a fixing element configured to fix said body (10) to said portion (2).

2. Support device according to claim 1, wherein the centers of said first and second openings (11, 12) lie along said one between said first and second axes (X, Y).

3. Support device according to claim 1 or 2, wherein said first and second openings (11, 12) are circular.

4. Support device according to any of the preceding claims, wherein said first and second openings (11, 12) have a variable opening cross-section along said third axis direction (Z).

5. Support device according to any of the preceding claims, wherein said first and second openings (11, 12) comprises a first portion (11', 12') and a second portion (11", 12"), said first portion (11', 12') having a diameter greater than said second portion (11", 12").

6. Support device according to any of the preceding claims, wherein at least one between said first and second openings (11, 12) defines a grooved profile (13).

7. Support device according to claim 5 and 6, wherein said grooved profile (13) is realized in said second portion (11", 12").

8. Support device according to claim 6 or 7, wherein said grooved profile (13) comprises tri-anguloid grooves cross-section configured to cooperate by contact with a portion of fixing means inserted in said opening (11, 12).

9. Support device according to claim 7, wherein said grooves have each the same predetermined angular extension.

10. Support device according to any of the preceding claims, further comprising at least one recess (14) realized between the first and/or second sides (10', 10'') of said main body (10) and said lateral side (10‴) thereof.

11. Support device according to claim 10, comprising a plurality of recess (14) aligned about said body (10).

12. Support device according to claim 10 or 11, wherein said at least one recess (14) is positioned between said first and second openings (11, 12) along said one between said first and second axes (X, Y).

13. Vehicular portion (2) comprising a wire/cable (W) connected to said vehicular portion (2) via a support device (1) according to any of the preceding claims.

14. Vehicle comprising a vehicular portion according to claim 13.
